Europäisches Patentamt

European Patent Office

Office européen des brevets

(11) Publication number: **0 069 456**
**B1**

(19)

(12) # EUROPEAN PATENT SPECIFICATION

(45) Date of publication of patent specification: **30.12.86**

(51) Int. Cl.⁴: **G 01 F 1/58**

(21) Application number: **82302701.6**

(22) Date of filing: **26.05.82**

(54) **Measuring device of electromagnetic flowmeter.**

(30) Priority: **05.06.81 JP 87105/81**

(43) Date of publication of application:
**12.01.83 Bulletin 83/02**

(45) Publication of the grant of the patent:
**30.12.86 Bulletin 86/52**

(84) Designated Contracting States:
**DE FR GB NL**

(56) References cited:
**JP-A-30 004 492**
**JP-A-56 054 565**
**US-A-3 937 080**
**US-A-3 942 377**

(73) Proprietor: **Aichi Tokei Denki Co., Ltd.**
**2-70, Chitose 1-chome**
**Atsuta-ku, Nagoya (JP)**

(72) Inventor: **Murase, Nobuyasu c/o Aichi Tokei**
**Denki Co., Ltd.**
**2-70, Chitose-1-chome**
**Atsuta-ku Nagoya (JP)**

(74) Representative: **Blanco White, Henry Nicholas**
**et al**
**ABEL & IMRAY Northumberland House**
**303-306 High Holborn**
**London WC1V 7LH (GB)**

Courier Press, Leamington Spa, England.

## Description

This invention relates to an electromagnetic flowmeter comprising a measuring device in which the magnetic reluctance of its magnetic circuit is decreased and the distance between its electrodes is increased so as to fully effectively utilize the exciting power thereby reducing the power consumption.

An electromagnetic flowmeter is known which includes a fluid conduit of circular cross section, and in which a magnetic path of considerable length having a large magnetic reluctance is associated with the fluid conduit so that the lines of magnetic force intersect the fluid conduit. This known electromagnetic flowmeter has been defective in that not only a large value of excitation ampere-turns is required for providing the magnetic flux of required density intersecting the fluid conduit, but also the degree of flux leakage becomes considerable, with the result that the exciting power is not fully effectively utilized, and a large amount of power consumption is inevitable.

Japanese Patent Specification 56—54565 discloses an electromagnetic flowmeter with radial magnetic flux extending over 360°. A pair of electromagnets for generating the radial flux are arranged within an insulated housing located along the central axis of a conduit through which fluid passes. The electromagnets are arranged tandem fashion with like poles facing each other and the conduit has an insulated lining.

US—A—3 942 377 discloses an electromagnetic flowmeter comprising an alternating current magnetic system with a yoke embracing a section of a pipeline. The pipeline accommodates main electrodes for removing potentials proportional to flow rate and additional electrodes for removing potentials proportional to eddy currents.

US—A—3 937 080 discloses an electromagnetic apparatus installable in a large diameter pipeline for measuring the flow velocity of an electrically conductive fluid in the pipeline. The apparatus comprises two pipe portions of different diameters, one positioned inside the other. Exciting coils for producing a magnetic field are located in the space between the pipe portions. Electrodes of a first group are positioned on the external surface of the outer pipe portion and electrodes of a second group are positioned on the inner surface of the internal pipe portion.

It is an object of the present invention to provide an electromagnetic quantity measuring device in which the exciting power is effectively utilized to reduce the power consumption.

The invention as claimed provides a measuring device for an electromagnetic flowmeter comprising: a fluid conduit having a generally circular cross-section and made of a non-magnetic material, at least the inner surface of the fluid conduit being an electrical insulator, an exciting coil and an inner yoke having a generally circular cross-section and disposed inside said conduit in concentric relation with said conduit for applying a magnetic field in a direction orthogonal with respect to the flow direction of a fluid flowing through the conduit thereby generating a voltage induced in a direction orthogonal with respect to both the flow direction of the fluid and the direction of application of the magnetic field, at least one pair of electrodes disposed in the conduit from which electrodes the induced voltage is taken, in use, for measuring the velocity of the fluid flowing through the conduit, and electrically insulating supporting members mounting the inner yoke in said conduit, the path of the fluid flowing, in use, through said conduit being, in cross-section, in the form of an annulus, characterized by the exciting coil being wound around a portion of an outer yoke made of a high-permeability material and disposed outside of said conduit, and the inner yoke being made of a high-permeability material.

Since the measuring device according to the present invention has an outer yoke provided with an electromagnetic coil disposed outside of a fluid conduit and an inner yoke disposed inside of the fluid conduit the magnetic reluctance of the magnetic circuit is thereby decreased, and since the cross-section of the path of fluid is in the form of an annulus the distance between the electrodes is increased (and hence the region available for the induced voltage generation is extended), whereby the level of the induced voltage indicative of the flow rate of the fluid is made higher or the power consumption is decreased.

Ways of carrying out the invention are described in detail below with reference to drawings which illustrate five specific embodiments, in which:

FIG. 1 is a schematic cross-sectional view showing the structure of a preferred embodiment of the measuring device according to the present invention; the section being taken along the line I—I in FIG. 2;

FIG. 2 is a longitudinal sectional view taken along the line II—II in FIG. 1;

FIG. 3 is a schematic cross-sectional view showing the structure of another preferred embodiment of the present invention;

FIG. 4 is a longitudinal sectional view taken along the line IV—IV in FIG. 3;

FIG. 5 is a schematic longitudinal sectional view showing the structure of still another preferred embodiment of the present invention;

FIG. 6 is a schematic cross-sectional view showing the structure of yet another preferred embodiment of the present invention; and

FIG. 7 is a schematic longitudinal sectional view showing the structure of a further preferred embodiment of the present invention.

Preferred embodiments of the present invention will now be described in detail with reference to the drawings.

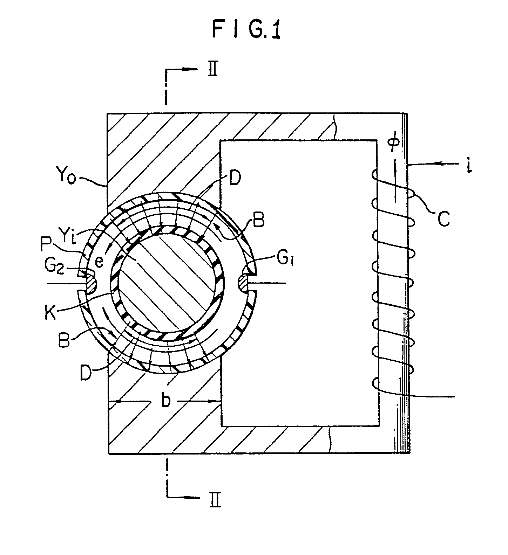

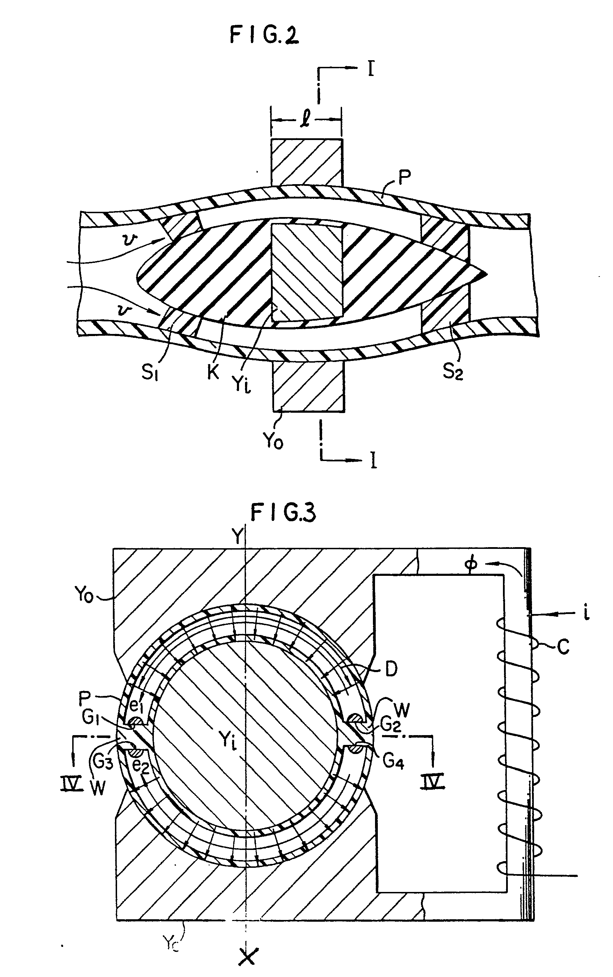

Referring first to FIGS. 1 and 2 showing the structure of a preferred embodiment of the measuring device according to the present invention, a fusiform or streamlined cone K having a generally circular cross section is concentrically or coaxially fixedly disposed in a fluid conduit P having a generally, circular cross section when sectioned orthogonal with respect to the flowing direction of a fluid. The pipe constituting this fluid conduit P is made of a non-magnetic material which is an electrical insulator in itself or which is provided with an electrical insulating coating on its inner wall. The cone K is also made of a non-magnetic material which is an electrical insulator in itself or which is provided with an electrical insulating coating on the surface making contact with the fluid. An outer yoke Yo having an exciting coil C wound around an arm thereof is disposed outside of the fluid conduit P, and the end faces of the pole pieces of the outer yoke Yo are so shaped as to mate the contour of the outer peripheral surface of the fluid conduit P. The width $h$ of the ends of the pole pieces of the yoke Yo is selected to lie within the range from 2/3 to 4/5 of the diameter of the fluid conduit P. An inner yoke Yi having a generally circular cross section concentric with that of the fluid conduit P when sectioned orthogonal with respect to the flowing direction of the fluid is disposed in the cone K so as to constitute a magnetic circuit together with the outer yoke Yo. The fluid flows through the path which is defined between the inner wall of the fluid conduit P and the outer surface of the cone K and which has therefore a cross sectional shape in the form of an annulus. The cone K is fixedly supported in the fluid conduit P by two supporting members $S_1$ and $S_2$ each in the form of a wing. The lines of magnetic force in the fluid conduit P pass the shortest distance of the gap between the yokes Yo and Yi as shown. More precisely, the lines of magnetic force pass in the radial direction of the fluid conduit P as indicated by the arrows $B$ in FIG. 1. Therefore, the voltages indiced in the fluid path defined between the inner wall of the fluid conduit P and the outer surface of the cone K have directions as indicated by the arrows $e$ between a pair of electrodes $G_1$ and $G_2$, that is, the voltages are induced in the circumferential direction of the fluid conduit P, and the amount of leakage flux is relatively small. Suppose now that the sectional area of the fluid path through which the magnetic flux passes is selected to be equal to the circular sectional areas of the portions of the fluid conduit P on the upstream and downstream sides of the flowmeter so that the fluid flows through all of these portions at the same velocity. Then, the larger the diameter of the cone K, the smaller is the gap of the magnetic path, and the magnetic flux density in the measuring part increases in inverse proportion to the length of the gap, at the same value of the excitation ampere-turns. Thus, by the provision of the cone K having a relatively large diameter as described above, the magnetic flux density increases thereby correspondingly increasing the induced voltage output. Further, because of the fact that the region $D$ effective for generating the induced voltage extends in the circumferential direction of the fluid conduit P, the voltage inducible range is substantially widened or the distance between the electrodes $G_1$ and $G_2$ is substantially increased, so that a higher voltage can be induced even when both the velocity of the fluid and the magnetic flux density remain unchanged. It will thus be seen that, according to the present invention, the level of the induced voltage can be made higher by the combined effect of the increased magnetic flux density due to the shortened gap of the magnetic path and the substantial extension of the region $D$ effective for generating the induced voltage. In other words, the required exciting power can be greatly reduced when the induced voltage is assumed to be set at the prior art level. It is apparent that the region $D$ can be further extended with the increase in the diameter of the cone K, and the exciting power requirement can be further reduced. In FIGS. 1 and 2, the symbols $\phi$ and v designate the magnetic flux and the velocity of the fluid respectively. On the basis of the voltage output derived from the measuring device shown in FIGS. 1 and 2, the flow rate of the fluid is calculated by means of a flow-rate calculating circuit as, for example, disclosed in United States Patent No. 4,227,408.

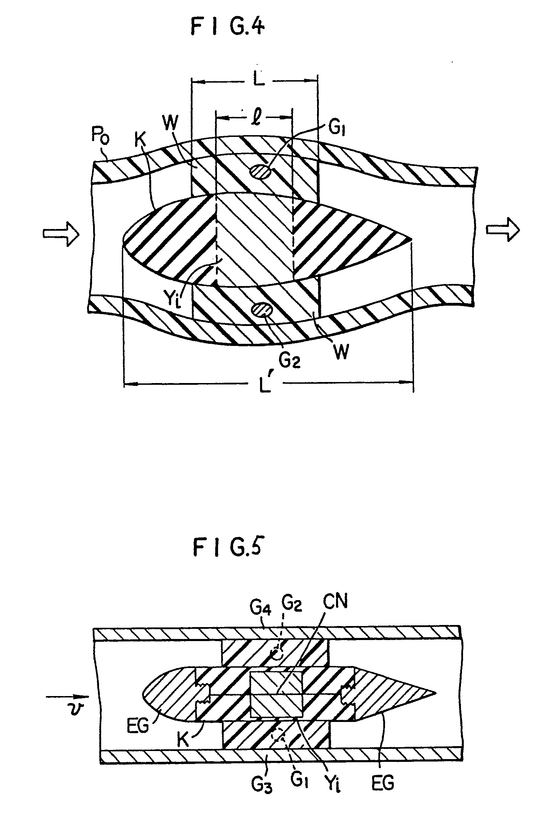

Another embodiment of the present invention is shown in FIGS. 3 and 4 in which like symbols are used to designate like parts appearing in FIGS. 1 and 2. Referring to FIGS. 3 and 4, a cone K is supported in a fluid conduit P by a pair of supporting members or wings W which extend in the diametrical direction of the conduit P in a relation orthogonal with respect to the centerline Y—Y of the pole pieces of an outer yoke Yo and which are disposed in parallel to the flowing direction of a fluid flowing through the conduit P. The length L of the wings W in the flowing direction of the fluid is selected to be relatively larger than the length $l$ of the measuring portions of the yokes Yo and Yi in the fluid flowing direction. Electrodes $G_1$ and $G_3$ are disposed on the upper and lower surfaces (FIG. 3) respectively of one of the wings W at about the middle of the length L, and similar electrodes $G_2$ and $G_4$ are similarly disposed on the other wing W, as shown in FIG. 3. The outer yoke Yo is not shown in FIG. 4. As in the case of the first embodiment, voltages $e_1$ and $e_2$ are induced in the circumferential direction of the conduit P. The electrodes $G_2$ and $G_3$ forming pairs with the electrodes $G_1$ and $G_4$ respectively are connected so that the voltage appearing across the electrodes $G_1 - G_2$ and that appearing across the electrodes $G_3 - G_4$ are added together, thereby deriving a voltage which is the sum of $e_1$ and $e_2$. Alternatively, the voltages $e_1$ and $e_2$ are separately amplified and then summed.

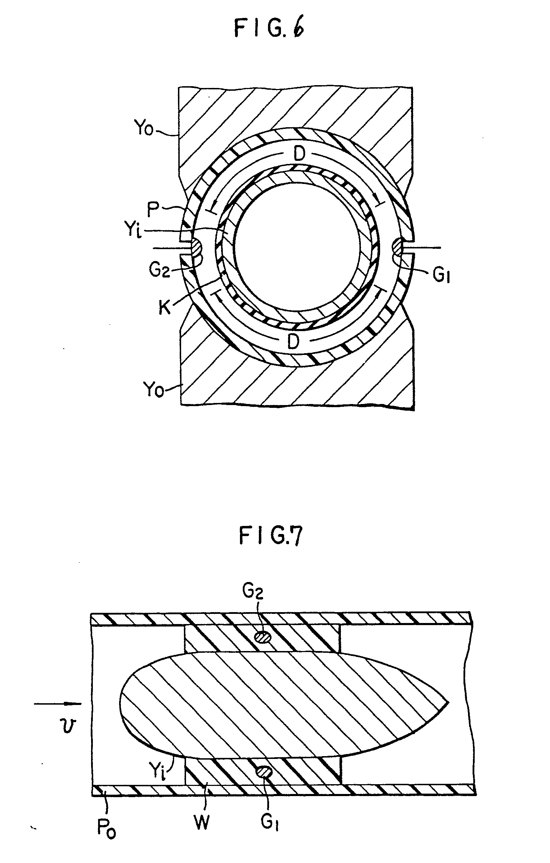

In still another embodiment of the present invention shown in FIG. 5, a pair of grounding electrodes EG are provided on a cone K. The embodiment shown in FIG. 5 is simple in construction and can be simply arranged in position, since there is no need for provision of grounding rings which have been mounted on both ends of an internally lined conduit in a known flowmeter. The function of the grounding electrodes EG is to suppress the noise level induced by the fluid, and the upstream and downstream grounding electrodes EG are electrically connected by a connection conductor CN.

Yet another embodiment of the present invention shown in FIG. 6 includes a hollow inner yoke Yi. The thickness of the hollow inner yoke Yi can be made small enough without causing saturation of the magnetic flux. The hollowness of the inner yoke Yi can save the material and reduce the weight.

A further embodiment of the present invention shown in FIG. 7 includes an inner yoke Yi which serves also as a cone K. The inner yoke Yi is made of an electrical insulating, soft magnetic material such as ferrite so that it can make direct contact with a fluid such as water. Therefore, when compared with the case in which the cone K is covered with an electrical insulating layer, the gap of the magnetic path can be made smaller by the amount corresponding to the thickness of the insulating layer, and the magnetic reluctance can be correspondingly decreased. An outer yoke Yo (not shown) may also be made of a magnetic material suitably reinforced to withstand the pressure of water. When such an outer yoke Yo is disposed to make directly contact with flowing water, the gap of the magnetic path can be made smaller by the amount corresponding to the wall thickness of the fluid conduit P.

It will be understood from the foregoing description that the present invention can make small the gap of the magnetic path, reduces the amount of leakage flux, extends the region effective for generation of the induced voltage and eliminates the possibility of lowering of the level of the induced voltage output due to interference. Consequently, the exciting power requirement can be reduced to improve the power consumption. The present invention is therefore especially advantageously applicable to an electromagnetic flowmeter of small diameter measuring a fluid of small flow rate.

## Claims

1. A measuring device for an electromagnetic flowmeter comprising: a fluid conduit (P) having a generally circular cross-section and made of a non-magnetic material, at least the inner surface of the fluid conduit (P) being an electrical insulator, an exciting coil (C) and an inner yoke (Yi) having a generally circular cross-section and disposed inside said conduit (P) in concentric relation with said conduit (P) for applying a magnetic field in a direction orthogonal with respect to the flow direction of a fluid flowing through the conduit (P) thereby generating a voltage induced in a direction orthogonal with respect to both the flow direction of the fluid and the direction of application of the magnetic field, at least one pair of electrodes (G) disposed in the conduit (P) from which electrodes (G) the induced voltage is taken, in use, for measuring the velocity of the fluid flowing through the conduit (P), and electrically insulating supporting members (W) mounting the inner yoke (Yi) in said conduit, the path of the fluid flowing, in use, through said conduit (P) being, in cross-section, in the form of an annulus, characterized by the exciting coil (C) being wound around a portion of an outer yoke (Yo) made of a high-permeability material and disposed outside of said conduit, and the inner yoke (Yi) being made of a high-permeability material.

2. A measuring device according to Claim 1, wherein the inner yoke (Yi) is housed in a cone (K) made of a non-magnetic material which is an electrical insulator in itself or which is provided with an electrical insulating coating on its outer surface.

3. A measuring device according to Claim 1 or 2, wherein the supporting members (W) are aligned on a diametrical line passing through a point on the central axis of said conduit (P), and said at least one pair of electrodes (G) are disposed on said supporting members.

4. A measuring device according to Claim 2, wherein the inner yoke (Yi) housed in said cone (K) is hollow.

5. A measuring device according to Claim 3, wherein the said electrodes (G) are provided in two pairs and are connected so that the induced voltage derived from one of the two electrode pairs is added to that derived from the other electrode pair.

6. A measuring device according to Claim 1, wherein the said inner yoke (Yi) has a streamline shape relative to the flowing direction of the fluid.

## Patentansprüche

1. Meßvorrichtung für einen elektromagnetischen Strömungsmesser, umfassend: eine Strömungsmittelleitung (P), die einen generell kreisförmigen Querschnitt hat und aus einem nichtmagnetischen Material hergestellt ist, wobei wenigstens die innere Oberfläche der Strömungsmittelleitung (P) ein elektrischer Isolator ist, eine Erregungsspule (C) und ein inneres Joch (Yi), das einen generell kreisförmigen Querschnitt hat und innerhalb der Leitung (P) in konzentrischer Beziehung zu der Leitung (P) angeordnet ist, und zwar zur Anwendung eines magnetischen Felds in einer Richtung, die orthogonal bezüglich der Strömungsrichtung eines durch die Leitung (P) fließenden Strömungsmittels ist, so daß dadurch eine Spannung erzeugt wird, die in einer Richtung induziert wird, welche orthogonal bezüglich sowohl der Strömungsrichtung des Strömungsmittels als auch der Richtung der Anwendung des magnetischen Felds ist, wenigstens ein Paar von Elektroden (G), die in der Leitung (P) angeordnet sind, von welchen Elektroden (G) induzierte Spannung im Gebrauch zur Messung der Geschwindigkeit des Strömungsmittels, das durch die Leitung (P) fließt, abgenommen wird, und elektrisch isolierende Halteteile (W), welche das innere Joch (Yi) in der Leitung anbringen, wobei der Weg des Strömungsmittels, das im Gebrauch durch die Leitung (P) fließt, im Querschnitt in der Form eines Rings ist, dadurch gekennzeichnet, daß die Erregungsspule (C) um einen Teil eines äußeren Jochs (Yo) gewickelt ist, das aus einem Material hoher Permeabilität hergestellt und außerhalb der Leitung angeordnet ist, und daß das innere Joch (Yi) aus einem Material hoher Permeabilität hergestellt ist.

2. Meßvorrichtung nach Anspruch 1, dadurch gekennzeichnet, daß das innere Joch (Yi) in einem Konus (K) untergebracht ist, der aus nichtmagnetischem Material hergestellt ist, das selbst ein elektrischer Isolator ist oder das auf seiner äußeren Oberfläche mit einer elektrisch isolierenden Beschichtung versehen ist.

3. Meßvorrichtung nach Anspruch 1 oder 2, dadurch gekennzeichnet, daß die Halteteile (W) auf einer diametralen Linie fluchten, die durch einen Punkt auf der mittigen Achse der Leitung (P) hindurchgeht, und daß wenigstens ein Paar von Elektroden (G) auf den Halteteilen angeordnet ist.

4. Meßvorrichtung nach Anspruch 2, dadurch gekennzeichnet, daß das innere Joch (Yi), das in dem Konus (K) untergebracht ist, hohl ist.

5. Meßvorrichtung nach Anspruch 3, dadurch gekennzeichnet, daß die Elektroden (G) in zwei Paaren vorgesehen und so verbunden sind, daß die induzierte Spannung, die von einem der beiden Elektrodenpaaren abgeleitet wird, zu derjenigen addiert wird, die von dem anderen Elektrodenpaar abgeleitet wird.

6. Meßvorrichtung nach Anspruch 1, dadurch gekennzeichnet, daß das innere Joch (Yi) eine Stromlinienform bezüglich der Flußrichtung des Strömungsmittels hat.

## Revendications

1. Dispositif de mesure équipant un débitmètre électromagnétique, comprenant: un conduit (P) de fluide présentant une section sensiblement circulaire et fabriqué en un matériau non magnétique, au moins la surface interne de ce conduit (P) de fluide consistant en un isolant électrique; un enroulement excitateur (C) et un bloc de bobinage intérieur (Yi) ayant une section sensiblement circulaire et situé à l'intérieur dudit conduit (P), concentriquement à ce conduit (P), de façon à appliquer un champ magnétique dans une direction perpendiculaire à la direction de l'écoulement d'un fluide circulant dans le conduit (P), engendrant ainsi une tension induite dans une direction perpendiculaire à la fois à la direction de l'écoulement du fluide et à la direction d'application du champ magnétique; au moins une paire d'électrodes (G) logées dans le conduit (P), électrodes (G) dont la tension induite est prélevée, en service, pour mesurer la vitesse du fluide circulant dans le conduit (P); et des organes de support (W) électriquement isolants assurant le montage du bloc intérieur (Yi) dans ledit conduit, le trajet emprunté par le fluide circulant en service, dans ledit conduit (P) se présentant, observé en coupe, sous la forme d'un passage annulaire, caractérisé par le fait que l'enroulement excitateur (C) est enroulé autour d'une zone d'un bloc de bobinage extérieur (Yo) consistant en un matériau de haute perméabilité et relégué à l'extérieur dudit conduit, le bloc intérieur (Yi) consistant en un matériau de haute perméabilité.

2. Dispositif de mesure selon la revendication 1, dans lequel le bloc intérieur (Yi) est logé dans un cône (K) fabriqué en un matériau non magnétique, qui constitue par lui-même un isolant électrique ou est muni, sur sa surface externe, d'un revêtement électriquement isolant.

3. Dispositif de mesure selon la revendication 1 ou 2, dans lequel les organes de support (W) sont alignés sur une ligne diamétrale passant par un point situé sur l'axe médian dudit conduit (P), ladite paire d'électrodes (G) prévue au minimum étant disposée sur lesdits organes de support.

4. Dispositif de mesure selon la revendication 2, dans lequel le bloc intérieur (Yi) logé dans ledit cône (K) est creux.

5. Dispositif de mesure selon la revendication 3, dans lequel lesdites électrodes (G) de présentent sous la forme de deux paires, et son raccordées de telle sorte que la tension induite dérivée de l'une des deux paires d'électrodes soit ajoutée à celle dérivée de l'autre paire d'électrodes.

6. Dispositif de mesure selon la revendication 1, dans lequel ledit bloc intérieur (Yi) présente une forme aérodynamique par rapport à la direction d'écoulement du fluide.

# F I G.1

0 069 456

## FIG.2

## FIG.3

2

# F I G.4

# F I G.5

FIG. 6

FIG.7